# EUROPÄISCHE PATENTSCHRIFT

(11) **EP 1 825 733 B1**
(45) Veröffentlichungstag und Bekanntmachung des Hinweises auf die Patenterteilung: **24.04.2013**
(21) Anmeldenummer: 07003282.6
(22) Anmeldetag: 16.02.2007
(51) Int. Cl.: A01B 49/02, A01B 79/00, A01B 63/24

(54) **Bodenbearbeitungsgerät**
Soil cultivation device
Appareil de traitement des sols

(30) Priorität: 22.02.2006 DE 102006008183
(43) Veröffentlichungstag der Anmeldung: 29.08.2007
(73) Patentinhaber: Amazonen-Werke H. Dreyer GmbH & Co. KG, 49205 Hasbergen (DE)
(72) Erfinder: Schomäker, Wilfried, 26160 Bad Zwischenahn (DE)

(56) Entgegenhaltungen:
- EP-A- 1 273 216
- EP-A1- 0 749 677
- EP-A1- 1 273 215
- EP-A2- 0 928 553
- WO-A-97/40660
- US-A- 6 041 582

## Beschreibung

Die Erfindung betrifft ein Bodenbearbeitungsgerät gemäß des Oberbegriffes des Patentanspruches 1.

Ein derartiges Bodenbearbeitungsgerät ist beispielsweise durch die EP 12 73 216 A1 bekannt. Dieses Bodenbearbeitungsgerät weist einen Geräterahmen auf, der an seiner Vorderseite über Kupplungselemente an einen Ackerschlepper ankuppelbar ist. Des Weiteren ist dem Gerät ein Fahrwerk zugeordnet, welches bei der Arbeit angehoben wird und zum Transport abgesenkt werden kann, so dass die Bodenbearbeitungsgeräte aus dem Boden gehoben werden. Auf der Vorderseite und der Rückseite des Geräterahmens sind als Tiefenführungselemente ausgebildete Walzen angeordnet. Vor den Laufrädern und hinter den vorderen Walzen ist ein Tragrahmen, an dem Bodenbearbeitungswerkzeuge befestigt sind, angeordnet. Dieser Tragrahmen ist an dem Tragrahmen mittels eines Parallelogramms höhenbeweglich angeordnet und kann mittels eines zwischen dem Geräterahmen und dem Tragrahmen angeordneten Hydraulikzylinders in der Höhe verstellt werden, so dass die Bearbeitungstiefe der Bodenbearbeitungswerkzeuge hierüber einstellbar ist. Der Hydraulikzylinder ist mit einem Steuerventil verbunden, welches von einem Bordcomputer angesteuert wird. Die motorische Stelleinrichtung für die Verstellung der Laufräder des Fahrwerkes, um das Fahrwerk anzuheben oder zum Transport abzusenken, ist mit einem Steuergerät, aber nicht mit dem Bordcomputer verbunden.

Insbesondere auf leichten und sandigen Böden kommt es vor, dass zu viel Gewicht auf der hinteren Bodenwalze lagert und sich vor der hinteren Bodenwalze der von den Bodenbearbeitungswerkzeugen gelockerte Boden aufstaut, oder dass die Bodenwalze zu tief in den Boden einsinkt.

Der Erfindung liegt die Aufgabe zugrunde, hier Abhilfe zu schaffen.

Diese Aufgabe wird erfindungsgemäß durch die kennzeichnenden Merkmale des Patentanspruches 1 gelöst. Infolge dieser Maßnahmen lässt sich der von der hinteren Bodenwalze erzeugte Rückverfestigungsgrad des Bodens durch das entsprechende Absenken der Laufräder des Fahrwerkes und das dadurch erreichte unterstützte Anheben des Geräterahmens und die hierdurch erreichte Entlastung der Bodenwalze, in dem ein Teil des Gerätegewichtes von den Laufrädern des Fahrwerkes getragen wird, einstellen, so dass der Rückverfestigungsgrad des Bodens an den Bodenzustand anzupassen ist. Es wird vermieden, dass die Bodenwalze zu tief einsinkt oder sich ein zu großer Erdwall vor der Bodenwalze aufstaut, so dass die Bodenwalze zum "Schieben" kommt und der Boden wird entsprechend der in der Bearbeitungskarte ortsspezifisch hinterlegten Zustands- und/oder Bearbeitungsdaten über das Feld rückverfestigt.

Um zu vermeiden, dass die Bodenwalze zu stark in den Boden einsinkt und dass es zum "Schieben" der Bodenwalze aufgrund eines zu großen Erdwalls vor der Bodenwalze kommt, ist vorgesehen, dass in der Bearbeitungskarte der ortsspezifisch maximal von der Bodenwalze zur erzeugende Rückverfestigungsdruck hinterlegt ist.

Um in einfacher Weise den von der Bodenwalze auf den Boden erzeugten Rückverfestigungsdruck ermitteln zu können, ist vorgesehen, dass zwischen dem Rahmen und der Bodenwalze ein Sensor zur Einstellung und/oder Ermittlung des von der Bodenwalze erzeugten Rückverfestigungsdruckes in Richtung des Bodens angeordnet ist.

Um den von der Bodenwalze erzeugten Rückverfestigungsgrad in einfacher Weise variieren zu können, ist vorgesehen, dass zumindest ein Teil der auf der Bodenwalze lastenden und/oder in Richtung des Bodens wirkenden Kraft durch Absenken der Laufräder auf dem Boden auf die Laufräder übertragbar ist.

Um den gewünschten Rückverfestigungsgrad in einfacher Weise erreichen zu können, ist vorgesehen, dass durch ein Zusammenspiel der Laufräder und der Bodenwalze der von der Bodenwalze in Richtung des Bodens wirkende Druck entsprechend der hinterlegten Bearbeitungskarte regelbar ist.

Weitere Einzelheiten der Erfindung sind der Beispielsbeschreibung und den Zeichnungen zu entnehmen.

Hierbei zeigen
- Fig. 1: das Bodenbearbeitungsgerät in Seitenansicht, und in Prinzipdarstellung beim Bearbeiten des Bodens, wobei die Laufräder ganz angehoben sind und
- Fig. 2: das Bodenbearbeitungsgerät gemäß Fig. 1, wobei die Laufräder abgesenkt sind, um einen Teil des Gerätegewichtes zu tragen.

Das Bodenbearbeitungsgerät weist den Geräterahmen 1 auf, der an seiner Vorderseite 2 über Kupplungselemente 3, beispielsweise einer Deichsel oder Dreipunktkupplungselemente, an einen Ackerschlepper ankuppelbar ist. Des Weiteren ist an dem Geräterahmen 1 ein Fahrwerk 4 angeordnet, welches bei der Arbeit angehoben wird und zum Transport abgesenkt werden kann, so dass die Bodenbearbeitungswerkzeuge 5 aus dem Boden 6 gehoben werden. Auf der Vorderseite 2 des Geräterahmens 1 sind die vorderen Abstützelemente 7, in Form von Laufrädern bzw. Walzen angeordnet. Diese Abstützelemente 7 sind gegenüber dem Geräterahmen 1 mittels einer nicht dargestellten Einstelleinrichtung in der Höhe verstellbar, so dass eine Grundarbeitstiefe der Bodenbearbeitungswerkzeuge 5, die weiter unten erläutert sind, eingestellt werden kann.

Auf der Rückseite 8 des Geräterahmens 1 sind die hinteren Abstützelemente 9, die als Laufräder oder Walzen ausgebildet sind, angeordnet. Diese Abstützelemente 9 sind ebenfalls über nicht dargestellte Einstellmittel gegenüber dem Geräterahmen in der Höhe einstellbar, so dass eine Grundeingriffstiefe der Bodenbearbeitungswerkzeuge 5 einstellbar ist. Vor den hinteren Abstützelementen 9 sind Egalisierungselemente 10 in Form von Scheiben angeordnet. Es können auch Egalisierungselemente in Form von Zinken oder Planierschienen vorgesehen sein.

Zwischen den vorderen und hinteren Abstützelementen 7 und 9, vorzugsweise vor dem Fahrwerk 3, ist ein Tragrahmen 11 angeordnet. An diesem Zwischenrahmen 11 sind die als Grubberzinken ausgebildeten Bodenbearbeitungswerkzeuge 5 angeordnet. Der Tragrahmen 11 ist an dem Geräterahmen 1 über die Schiebeführung 12 mit den Einstellelementen 13 höhenverstellbar angeordnet.

Während der Bestellarbeit kann das Fahrwerk 4 in die dargestellte Position gebracht und somit vom Boden 6 abgehoben werden d.h. dass die vorderen und hinteren Abstützelemente 7 und 9 das Bodenbearbeitungsgerät auf den Boden 6 abstützen. Hierbei rollen die Abstützelemente 7 und 9 auf den Boden 6 ab und führen somit die Bobenbearbeitungszinken 5 bodenkonturabhängig in ihrer Eingriffstiefe in den Boden 6.

Das Fahrwerk 4 weist drehbar an Achsschenkeln angeordnete Laufräder auf. Die Achsschenkel sind mittels eines Gelenkes an dem Geräterahmen 1 angeordnet. Zwischen dem Achsschenkel und dem Geräterahmen sind nicht dargestellte Stellelemente angeordnet, mit denen die Laufräder des Fahrwerks 4 anhebbar und absenkbar sind. Diese Stellelemente können beispielsweise als doppeltwirkende Hydraulikzylinder ausgebildet sein und sind über nicht dargestellte Hydraulikleitungen mit einer Hydraulikanlage und einem Steuergerät verbunden. Dieses Steuergerät ist über den Bordcomputer 14 ansteuerbar.

In dem Bordcomputer 14 ist eine Bearbeitungskarte über das zu bearbeitende Feld hinterlegt. In der Bearbeitungskarte sind ortsspezifische Zustands- und/oder Bearbeitungsdaten über das Feld hinterlegt. Des Weiteren ist in der Bearbeitungskarte der ortsspezifisch maximal von der Bodenwalze 9 zu erzeugende Rückverfestigungsdruck hinterlegt.

Des Weiteren ist der Bordcomputer 14 mit einer Ortungseinrichtung, die beispielsweise auf das GPS-System basiert, ausgestattet.

Aufgrund der der in dem Bordcomputer 14 hinterlegten Daten ist über den Bordcomputer 14 die motorische Stelleinrichtung des Fahrwerkes 4 derart ansteuerbar, dass der durch die Bodenwalze 9 ausgeübte Rückverfestigungsdruck und erreichte bzw. erreichbare Rückverfestigungsgrad des Bodens an den Bodenzustand anpassbar ist. Hierzu ist zumindest ein Teil der auf der Bodenwalze 9 lastenden und/oder in Richtung des Bodens wirkenden Kraft durch Absenken der Laufräder 4 auf den Boden auf die Laufräder 4 übertragbar. Um zu ermitteln, welcher Rückverfestigungsdruck von der Bodenwalze 9 auf den von der Bodenwalze 9 auf den von den Bodenbearbeitungswerkzeugen 5 gelockerten Boden ausgeübt wird, ist zwischen dem Rahmen 1 und der Bodenwalze 9 ein Sensor 15 zur Einstellung und/oder Ermittlung des von der Bodenwalze 9 erzeugten Rückverfestigungsdruckes in Richtung des Bodens 6 angeordnet.

Die Funktionsweise des Bodenbearbeitungsgerätes ist folgende:

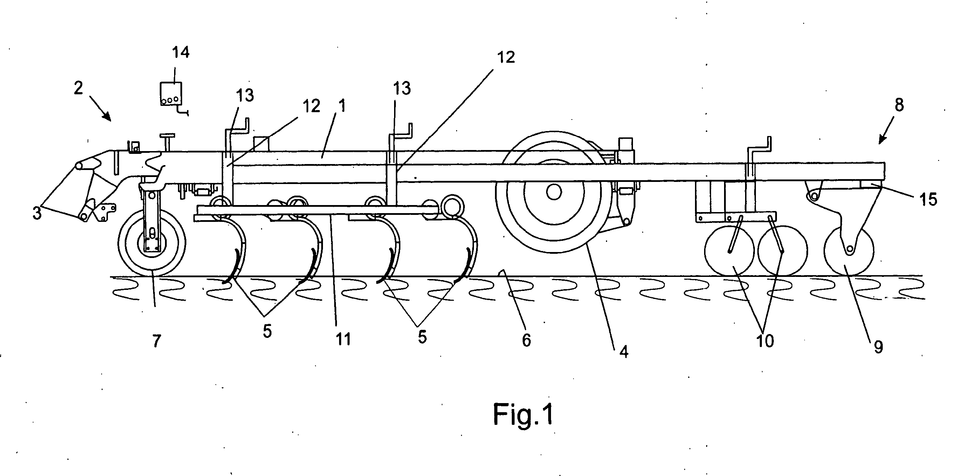

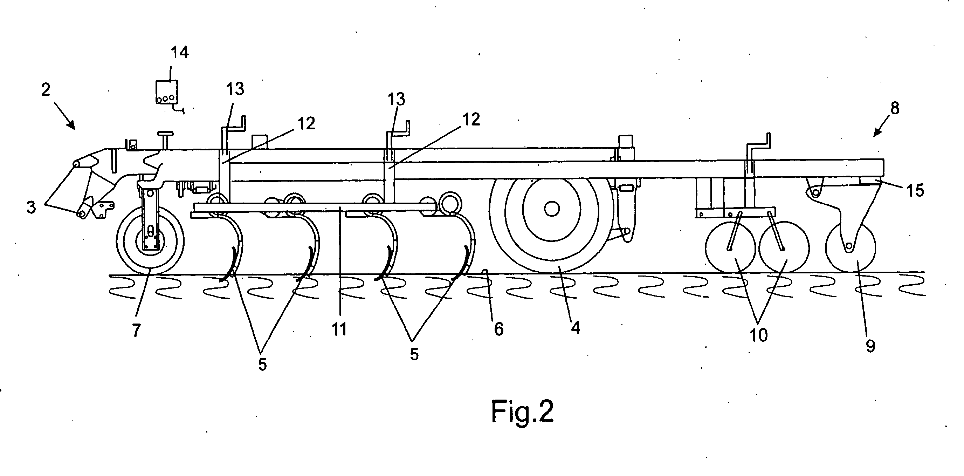

Während des Einsatzes auf dem Acker wird das Fahrwerk 4 entsprechend Fig. 1 angehoben oder etwas gegen den Boden gedrückt, wie Fig. 2 zeigt um ein Teil des Gerätesgewichtes zu übernehmen, damit das gesamte Gerätegewicht, welches an sich auf der Bodenwalze 9 lastet, von der Bodenwalze teilweise auf die Laufräder 4 übertragen und von diesen getragen wird.

In dem Bordcomputer 14 ist hinterlegt, wie groß der jeweils an der jeweiligen Stelle auf dem Feld von der Bodenwalze 9 maximal ausübbare Rückverfestigungsdruck sein darf. Entsprechend der hinterlegten Daten wird von dem Bordcomputer 14 das Steuergerät der Hydraulikanlage, die mit den Stellelementen des Fahrwerkes 4 verbunden ist, entsprechend angesteuert, so dass die Laufräder 4 mehr oder weniger gegen den Boden gedrückt oder teilweise ganz von dem Boden abgehoben sind, und zwar entsprechend des in dem Bordcomputer 14 hinterlegten maximalen Rückverfestigungsdruckes, der den entsprechend in dem Bordcomputer ortsspezifisch hinterlegten Daten entspricht.

Hierdurch wird sichergestellt, dass die Bodenwalze 9 den gelockerten Boden immer mit dem richtigen Rückverfestigungsdruck verfestigt. Somit sinkt die Bodenwalze 9 nicht zu tief ein. Weiterhin kann sich kein zu großer Erdwall vor der Bodenwalze 9 aufstauen. Darüber hinaus befestigt die Bodenwalze 9 den Boden in der gewünschten Weise.

## Patentansprüche

1. Bodenbearbeitungsgerät mit einem Rahmen (1), an dem Bodenlockerungswerkzeuge (5) und zumindest eine auf dem Boden (6) abrollende und den Boden (6) rückverfestigende Bodenwalze (9) angeordnet sind, wobei vorzugsweise vor der Bodenwalze (9) am Rahmen (1) mittels einer motorischen Stelleinrichtung in Höhenrichtung verstellbare Laufräder eines Fahrwerkes (4) des Bodenbearbeitungsgerätes angeordnet sind, **dadurch gekennzeichnet, dass** die motorische Stelleinrichtung mit einem Bordcomputer (14) verbunden ist, dass in dem Bordcomputer (14) eine Bearbeitungskarte über das zu bearbeitende Feld hinterlegt ist, dass in der Bearbeitungskarte ortsspezifisch Zustands- und/oder Bearbeitungsdaten über das Feld hinterlegt sind, dass über den Bordcomputer (14) aufgrund der hinterlegten Daten die motorische Stelleinrichtung derart ansteuerbar ist, dass der durch die Bodenwalze (9) ausgeübte Rückverfestigungsdruck und der hierdurch erreichte Rückverfestigungsgrad des Bodens (6) an den Bodenzustand anpassbar ist.

2. Bodenbearbeitungsgerät nach Anspruch 1, **dadurch gekennzeichnet, dass** in der Bearbeitungskarte der ortsspezifisch maximal von der Bodenwalze (9) zur erzeugende Rückverfestigungsdruck hinterlegt ist.

3. Bodenbearbeitungsgerät nach Anspruch 1, **dadurch gekennzeichnet, dass** zwischen dem Rahmen (1) und der Bodenwalze (9) ein Sensor zur Einstellung und/oder Ermittlung des von der Bodenwalze (9) erzeugten Rückverfestigungsdruckes in Richtung des Bodens (6) angeordnet ist.

4. Bodenbearbeitungsgerät nach Anspruch 1, **dadurch gekennzeichnet, dass** zumindest ein Teil der auf der Bodenwalze (9) lastenden und/oder in Richtung des Bodens (6) wirkenden Kraft durch Absenken der Laufräder (4) auf dem Boden (6) auf die Laufräder (4) übertragbar ist.

5. Bodenbearbeitungsgerät nach einem oder mehreren der vorstehenden Ansprüche, **dadurch gekennzeichnet, dass** durch ein Zusammenspiel der Laufräder (4) und der Bodenwalze (9) der von der Bodenwalze (9) in Richtung des Bodens (6) wirkende Druck entsprechend der hinterlegten Bearbeitungskarte regelbar ist.

## Claims

1. Soil cultivation device having a frame (1) on which soil loosening tools (5) and at least one soil roller (9) which rolls on the soil (6) and re-compacts the soil (6) are arranged, wherein running wheels, which can be adjusted in the vertical direction by means of a motor-operated adjustment device, of a chassis (4) of the soil cultivation device, are preferably arranged in front of the soil roller (9) on the frame (1), **characterized in that** the motor-operated adjustment device is connected to an on-board computer (14), **in that** a cultivation map relating to the field to be cultivated is stored in the on-board computer (14), **in that** state data and/or cultivation data relating to the field is stored on a location-specific basis in the cultivation map, **in that** the motor-operated adjustment device can be actuated by means of the on-board computer (14) on the basis of the stored data in such a way that the re-compacting pressure which is applied by the soil roller (9) and the degree of re-compaction of the soil (6) which is achieved as a result can be adapted to the state of the soil.

2. Soil cultivation device according to Claim 1, **characterized in that** the maximum re-compacting pressure which can be generated by the soil roller (9) on a location-specific basis is stored in the cultivation map.

3. Soil cultivation device according to Claim 1, **characterized in that** a sensor for setting and/or determining the re-compacting pressure generated by the soil roller (9) is arranged in the direction of the soil (6), between the frame (1) and soil roller (9).

4. Soil cultivation device according to Claim 1, **characterized in that** at least some of the force which loads the soil roller (9) and/or acts in the direction of the soil (6) can be transmitted to the running wheels (4) by lowering the running wheels (4) onto the soil (6).

5. Soil cultivation device according to one or more of the preceding claims,
**characterized in that** the pressure acting from the soil roller (9) in the direction of the soil (6) can be regulated in accordance with the stored cultivation map by means of an interplay between the running wheels (4) and the soil roller (9).

## Revendications

1. Appareil de préparation du sol, comprenant un châssis (1) sur lequel sont disposés des outils d'ameublissement du sol (5) et au moins un rouleau de sol (9) roulant sur le sol (6) et reconsolidant le sol (6), dans lequel des roues de roulement d'un mécanisme de roulement (4) de l'appareil de préparation du sol, réglables en hauteur au moyen d'un dispositif de réglage motorisé, sont disposées de préférence avant le rouleau de sol (9) sur le châssis (1), **caractérisé en ce que** le dispositif de réglage motorisé est connecté à un ordinateur de bord (14), **en ce qu'**une carte de préparation concernant le champ à préparer est consignée dans l'ordinateur de bord (14), **en ce que** des données d'état et/ou de préparation concernant le champ sont consignées dans la carte de préparation de manière spécifique au site, **en ce que** le dispositif de réglage motorisé peut être commandé, par le biais de l'ordinateur de bord (14), en fonction des données consignées, de telle sorte que la pression de reconsolidation exercée par le rouleau de sol (9) et le degré de reconsolidation du sol (6) atteint de cette manière puissent être adaptés à l'état du sol.

2. Appareil de préparation du sol selon la revendication 1, **caractérisé en ce que** la pression de reconsolidation devant être produite au maximum par le rouleau de sol (9) de manière spécifique au site est consignée dans la carte de préparation.

3. Appareil de préparation du sol selon la revendication 1, **caractérisé en ce qu'**entre le châssis (1) et le rouleau de sol (9) est disposé un capteur pour ajuster et/ou déterminer la pression de reconsolidation produite par le rouleau de sol (9) dans la direction du sol (6).

4. Appareil de préparation du sol selon la revendication 1, **caractérisé en ce qu'**au moins une partie de la force sollicitant le rouleau de sol (9) et/ou agissant dans la direction du sol (6) peut être transmise aux roues de roulement (4) par abaissement des roues de roulement (4) sur le sol (6).

5. Appareil de préparation du sol selon l'une quelconque ou plusieurs des revendications précédentes, **caractérisé en ce que** la pression agissant depuis le rouleau de sol (9) dans la direction du sol (6) par l'action conjointe des roues de roulement (4) et du rouleau de sol (9) peut être réglée en fonction de la carte de préparation consignée.
